(19) Europäisches Patentamt
European Patent Office
Office européen des brevets

(11) EP 2 362 638 B1

(12) EUROPEAN PATENT SPECIFICATION

(45) Date of publication and mention
of the grant of the patent:
**07.09.2016 Bulletin 2016/36**

(51) Int Cl.:
*G06T 7/20* *(2006.01)*    *H04N 5/232* *(2006.01)*
*H04N 5/14* *(2006.01)*

(21) Application number: **11152881.6**

(22) Date of filing: **01.02.2011**

(54) **A method for camera motion estimation resistant to foreground motion dominance**

Verfahren zur Kamerabewegungsschätzung mit Resistenz gegen Vordergrundbewegungsdominanz

Procédé d'évaluation de mouvement de caméra résistant à la dominance de mouvement au premier plan

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2010 TR 201001471**

(43) Date of publication of application:
**31.08.2011 Bulletin 2011/35**

(73) Proprietor: **Vestel Elektronik Sanayi ve Ticaret A.S.
45030 Manisa (TR)**

(72) Inventors:
• **Bastug, Ahmet**
**45030, Manisa (TR)**
• **Malkoc, Umit**
**45030, Manisa (TR)**

(74) Representative: **Cayli, Hülya
Paragon Consultancy Inc.
Koza Sokak No: 63/2
GOP
06540 Ankara (TR)**

(56) References cited:
**EP-A1- 1 117 251      US-A1- 2006 034 528
US-A1- 2006 280 249**

## Description

### Technical Field

This invention relates to a camera motion estimation method for global motion estimation applications required in video processing.

### Prior Art

In the art Global Motion (GM) has two different meanings which might sometimes conflict: dominant motion in the frame and camera motion. Dominant motion is described as motion of large objects. On the other hand, camera motion might also have several different interpretations. In case sophisticated camera movements such as zoom in/out or rotations are considered in addition to translational movements, GM is represented by a parameter set which defines the camera movement of each pixel based on its location in the frame with respect to the center of the frame. Several methods have been developed to estimate GM so that a unity in motion is obtained and true motion is estimated. Developed Global Motion Estimation (GME) methods are used for video processing applications for the following purposes;

- Camera stabilization
- Object segmentation
- Global motion compensation for Frame Rate Conversion (FRC) or Film Judder Removal (FJR)
- Motion compensated denoising
- Motion based resolution increase (super resolution)

Since GME has such purposes, Global Motion (GM) should be estimated accurately.

All GME methods start with an already computed Motion Vector Field (MVF) from a block matching operation between two consecutive video frames. In other words, GM is estimated by dividing images into blocks and by determining motion vector of each block. Thus, the motion vector of each pixel is the motion vector belonging to the block where the pixel is comprised.

There are several methods which use camera motion estimation for GME. For instance in patent document US 6 738 099 B2, a robust technique for estimating camera motion parameters which calculates the motion vectors for a current frame vis-à-vis a previous frame using a multi-scale block matching technique is described. In described method, the means of the motion vectors for the current and the previous frames are compared for a temporal discontinuity, the detection of such temporal discontinuity as a temporal repetition, such as frozen field or 3:2 pull down, terminating the processing of the current frame with the camera motion parameter estimate for the previous frame being used for the current frame. Otherwise motion vectors for spatially flat areas and text/graphic overlay areas are discarded and an error-of-fit for the previous frame is tested to determine initial parameters for an iterative camera motion estimation process. If the error-of-fit is less than a predetermined threshold, then the camera motion parameters for the previous frame are used as the initial parameters, otherwise a best least squares fit is used as the initial parameters.

Another patent document US 2009 237516 A1 describes a system and a method for intelligent and efficient camera motion estimation for video stabilization. Said method proposes a technique that estimates camera motion accurately from the local motion of 16x16 blocks of a frame that is the scaled down version of actual frame at a given instant of time. The camera motion is estimated from a histogram based techniques where in the histogram of local motion is computed and reliable peaks of histogram are used to estimate the same.

Moreover in articles, "Differential estimation of the global motion parameters zoom and pan," M. Hoetter, Signal Process., vol. 16, pp. 249-265, 1989; "An efficient true-motion estimator using candidate vectors from a parametric motion model", De Haan G., Biezen P.W.A, IEEE Trans. on Circ. and Systems for Video Techn. Feb 1998; "Global Motion Estimation in Image Sequences Using Robust Motion Vector Field Segmentation", Joerg Heuer, André Kaup, Proceedings ACM Multimedia 99, Orlando, Florida, 30 October - 5 November 1999, pp. 261-264; "A new two-stage global/local motion estimation based on a background/foreground segmentation", F. Moscheni, F. Dufaux, and M. Kunt, in IEEE Proc. ICASSP'95, Detroit, MI, May 1995, some GME methods which models camera rotation, zoom and translation movements are described. However, in the Hoetter's and De Haan's article, proposed techniques can get stuck to dominant motion (or parameters) instead of the motion of the camera which in most cases corresponds to the background motion.

Moreover, the method in Heuer's article applies a linearization operation since rotation has a nonlinear relation with respect to the pixel coordinates in the frame. In order to discard unreliable motion vectors and the vectors possibly belonging to the foreground objects which move independently, an iterative method is considered. In addition to its complex nature, another drawback is the exclusion of the vectors in homogeneous regions since the vectors in such regions would possibly not reflect the true motion. Also, the method in Heuer's article is applying linear regression, a linear least squares computation which would not be optimal since the error on Motion Vectors (MVs) is not uniform or Gaussian distributed.

Furthermore, in Moscheni's article, after making a coarse distinction between foreground and background Gaussian pyramid model of the image is adopted and, in a multistage processing context, block matching operations is applied on consecutive frame pixels from multiple grids to refine the GM parameter estimates. The estimates from one level serve as initial estimates for the next level. This operation has an enormous complexity and computational cost.

Patent document no. EP1117251A1 discloses a method and structure for stabilizing a motion image formed using a sequence of successive frames. According to said document, a dominant (global) motion of the frame is determined and according to said dominant motion, a stabilization operation is performed.

Another patent document no. US2006034528A1 discloses a system and method for non-iterative global motion estimation. According to this document, a plurality of motion vectors are calculated for frames by block matching process and a global motion vector is generated from said plurality of motion vectors.

Present invention describes a method for camera motion estimation which starts with a true (smooth) motion estimation. Thus, complexity would decrease and GME method would have more samples to operate on, which would improve the quality of the estimation. Moreover, by using Vector Median Filtering operation in camera motion estimation, drawback of getting stuck to possibly dominant foreground motion is avoided and computational cost is reduced.

### Brief Description of the invention

Present invention explains a method for camera motion estimation to have more accurate and robust Global Motion (GM) estimation. According to said method, it is assumed that before applying camera motion estimation algorithms, a Motion Vector Field (MVF) is obtained from a true (smooth) Motion Estimation (ME) unit. Then, required block size and number of reduction stages are determined and camera motion estimation algorithms are applied to the obtained MVF by using determined block size, determined reduction stages and vector median filtering. Thus, more precise camera motion estimation is obtained.

### Objective of the invention

The object of the present invention is to provide a new approach for Global Motion (GM) estimation by estimating camera motion.

Another object of the present invention is to obtain an accurate GM estimation by using camera motion estimation.

Another object of the present invention is to obtain precise camera motion estimation by using vector median filtering.

### Brief Description of the Drawings

Figure 1:    shows general system used for Global Motion Estimation (GME) by using camera motion estimation.
Figure 2:    shows block diagram of translational camera motion estimation.

The reference numbers as used in figures may possess the following meanings.

Frame delayer (1)
Smooth motion estimation unit (2)
Camera motion estimation unit (3)
k, $m_i$ and $n_i$ decision (21)
Vector median filtering for k-1 stages (22)
The means of $|MVF_{k,R}|$ and $|MVF_{k,C}|$ computation (23)
Comparison of computed means (24)
Clustering the samples of selected MVF (25)
Applying vector median filtering to clustered set (26a)
Applying vector median filtering to whole set (26b)
Comparison with predefined thresholds (27)

### Detailed Description of the invention

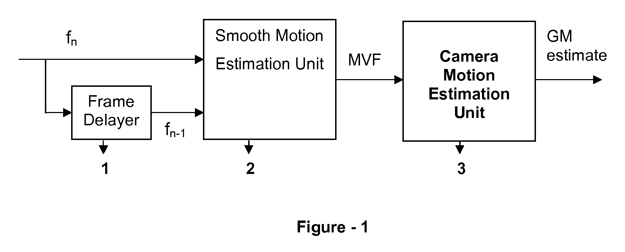

The present invention offers a method for camera motion estimation to obtain more accurate and robust Global Motion Estimation (GME). General system used for GME by using camera motion estimation is given in Figure 1. Since prior applications have drawback of complexity in camera motion estimation applications, present invention starts with a Motion Vector Field (MVF) which is obtained from a true (smooth) motion estimation (ME) unit given in Figure 1. Said MVF has an MxN dimension where

$$M = m_1 * m_2 * \ldots * m_k, \qquad \text{Eq. 1}$$

$$N = n_1 * n_2 * \ldots * n_k \qquad \text{Eq. 2}$$

and each vector in said MVF has two components; row component and column component. Thus, MVF which comprises row components can be represented as MVF_R and column components can be represented as MVF_C. If one or two of the MVF dimensions do not exactly match the result of multiplications then corresponding dimension or dimensions are expanded, i.e. the frame is enlarged. For example if MVF dimension is 34x45 the row dimension can be expanded at top and bottom to 36x45 by copying the top and bottom row vectors as also new top and bottom row vectors. In the opposite case, say original MVF dimension is 37x45 one row vector field can be excluded from computations to make the field 36x45. Similar reasoning applies for mismatches in column dimension. In above described equations, Eq. 1 and Eq. 2, k represents the number of vector field reduction stages which will be applied.

Before applying the algorithms for camera motion estimation, some operations should be carried out. First, required block size is determined. Then, video size is divided by determined block size to obtain MVF dimensions. Then, required reduction stages are determined and dimension equations Eq. 1 and Eq. 2 are obtained according to determined reduction stage. To make explained operations more clear, an example is given. Let the video size is 576x720 and required block size is 16. Then the dimensions will be; M = 576/16 = 36 and N = 720/16 = 45. Let the number of vector field reduction stages, k, is 3. Then, according to Eq.1; $m_1 = 3$, $m_2 = 3$, $m_3 = 4$ and according to Eq. 2; $n_1 = 3$, $n_2 = 3$, $n_3 = 5$.

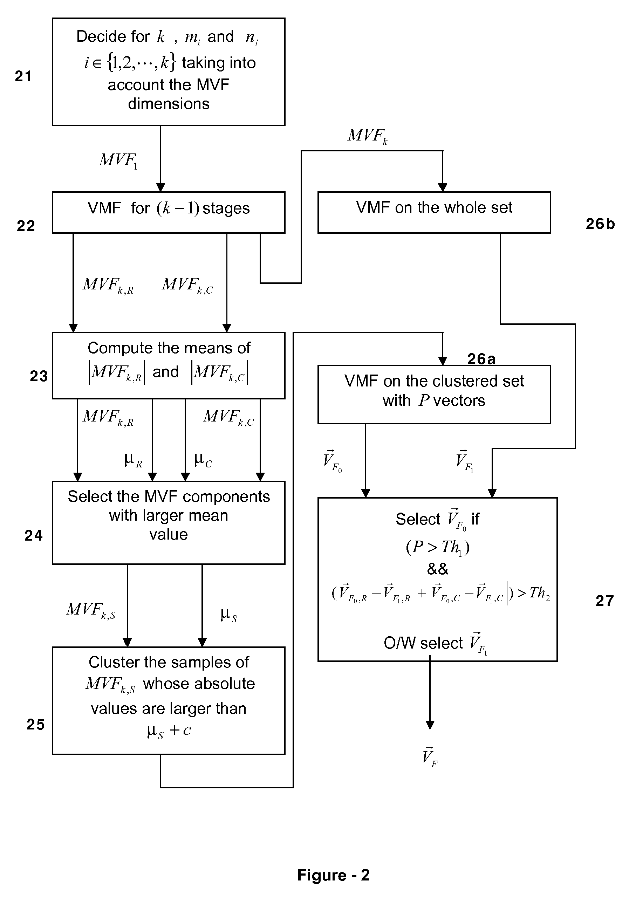

Applied algorithm for camera motion estimation, whose block diagram is given in Figure 2, is described below step by step.

Step 1: Let initial motion vector field be $MVF_1$ with MxN dimension and after k-1 stages, obtained reduced motion vector field be $MVF_k$ with dimension $M_k x N_k$. Then, stage i contains operations on $MVF_i$ of dimension $M_i x N_i$ where

$$M_i = m_i * m_{i+1} * \ldots * m_k$$

$$N_i = n_i * n_{i+1} * \ldots * n_k$$

After above mentioned determinations motion vector field is partitioned into rectangular groups such that; $G_i = m_{i+1} * \ldots * m_k * n_{i+1} * \ldots * n_k$ which corresponds to vectors of the sub-blocks of the frame. Each rectangular group contains $S_i = m_i * n_i$ vectors. After partitioning, vector median filtering is applied on the elements of each group (22) which gives the dominant motion vector $\vec{V}_{i,j}$ of the group. Vector median filtering operation can be formulated as;

$$\vec{V}_{i,j} = \arg\min_t \sum_{l=1}^{S_i} \left\| \vec{V}_l - \vec{V}_t \right\| \quad t \in \{1, 2, \cdots, S_i\} \qquad \text{Eq. 3}$$

where $\|\cdot\|$ is the Euclidean distance operator, $j \in \{1, 2, \cdots G_i\}$ is the group label and $\vec{V}_l$ are the vectors in group $j$ where $l \in \{1, 2, \cdots, S_i\}$. In order to simplify the computations, Euclidean distance can be replaced by the absolute difference sum of row and column components. Thus, $\|\vec{V}_l - \vec{V}_t\|$ is redefined as $|V_{lR} - V_{t,R}| + |V_{l,C} - V_{t,C}|$ where $|\cdot|$ is the absolute operator and R subscript represents the row component and C represents the column component of the vectors. Thus, vector components given in Eq. 3 are now scalars because of absolute operator which reduces complexity and computational cost.

Vector median filtering usage ensures that the output vector is definitely an element from motion vector field. The mean and median methods used in prior art work independently on the vertical and horizontal components of the vector fields and their outcomes might result vectors which do not belong to the motion vector field.

Steps described below are applied for clustering vectors which have higher probability of belonging to the background.

Step 2: The means of the absolute values of motion vector field row component $MVF_{k,R}$ for last reduction stage and motion vector field column component $MVF_{k,C}$ for last reduction stage are computed (23) and represented as $\mu_R$ and $\mu_C$ respectively.

Step 3: The means of the absolute values of $MVF_{k,R}$ and $MVF_{k,C}$ are compared (24). If $\mu_R > \mu_C$ then, $MVF_{k,R}$ is selected and $MVF_{k,C}$ is discarded; otherwise $MVF_{k,R}$ is discarded and $MVF_{k,C}$ is selected. This step is required to continue with more significant camera motion component. Let selected motion vector field be $MVF_{k,S}$ and the mean of $MVF_{k,S}$ be $\mu_S$.

Step 4: $MVF_k$ elements whose $MVF_{k,S}$ component absolute values are larger than $\mu_S + c$, are clustered (25) where c is a small term that can be such as 1 or 2 to decrease the impact of motion estimation noise and to give some bias towards clustering only the large vectors. From now on we call the number of vectors falling into this category as P.

Step 5: Vector median filtering is applied to the clustered vector set of P elements (26a) to obtain $\vec{V}_{F_0}$ which is one of the two candidates to become the final (ultimate) global motion vector estimate.

Step 6: Vector median filtering is applied to the full set of the last reduction stage such as $m_k * n_k$ elements (26b) to obtain $\vec{V}_{F_1}$ which is the second candidate to become the final (ultimate) global motion vector estimate.

Step 7: The number of vectors in the clustered set is compared with a predefined threshold $Th_1$ and absolute difference sum of row and column components for $\vec{V}_{F_0}$ and $\vec{V}_{F_1}$ is compared with another predefined threshold $Th_2$. If $P > Th_1$ and if $(|\vec{V}_{F_0,R} - \vec{V}_{F_1,R}| + |\vec{V}_{F_0,C} - \vec{V}_{F_1,C}|) > Th_2$ then, $\vec{V}_{F_0}$ is selected as the translational camera (background) motion estimate, otherwise $\vec{V}_{F_1}$ is selected (27).

First threshold $Th_1$ which is compared with the number of vectors in the clustered set could be chosen for example as 25% of $S_k$. Choosing $Th_1$ as 25% of $S_k$ would ensure that even though the background dominancy is not required, background should still occupy a reasonable portion of image.

Second threshold $Th_2$ could be chosen for instance as 5. Thus clustered estimation $\vec{V}_{F_0}$ is considered only if $\vec{V}_{F_0}$ is really different from the frame dominant motion $\vec{V}_{F_1}$. Otherwise $\vec{V}_{F_1}$ selection is more advantageous since, $\vec{V}_{F_1}$ uses more vector samples. Thus, the estimation is more precise.

Above explained steps are constructed for estimation of translational pan and tilt parameters. To estimate camera motion according to zoom and rotation parameters the vector median filtering operations in Step 5 and Step 6 can be replaced by a differential estimation technique. Then, Step 7 will again compare only the translational (camera pan and tilt) components to distinguish background motion since other parameters (zoom and rotation) will most probably manifest similar behaviour in both foreground and background.

As shown in Figure 1, above explained steps are done by a camera motion estimation unit (3). First, a present frame ($f_n$) and a delayed frame ($f_{n-1}$), which is obtained from a frame delayer (1) by applying present frame ($f_n$), are sent to a true (smooth) motion estimation unit (2) to obtain MVF to which camera motion estimation algorithm will be applied. Said smooth motion estimation unit can be a single unit or can be a cascade of ME and smoothing units. Then, obtained MVF is sent to a camera motion estimation unit (3). Above explained steps are carried out on said MVF. The output of said system will be an accurate Global Motion Estimation.

## Claims

1.  A method for camera motion estimation using global motion estimation for video applications comprising the steps of;

    - obtaining an initial motion vector field, $MVF_1$, from a smooth motion estimation unit by performing a block matching operation between two consecutive frames; $MVF_1$ having a $M_1 \times N_1$ dimension wherein $M_1 = m_1 * m_2 * ... * m_k$ (Eq. 1), $N_1 = n_1 * n_2 * ... * n_k$ (Eq. 2) and k represents the number of vector field reduction stages which will be applied, the method being **characterized by** further comprising the steps of;
    - determining the number of reduction stages k and obtaining elements mi and ni according to Eq. 1 and Eq. 2, for i=1 to k (21), partitioning the motion vector fields into rectangular groups for each reduction stage (22) wherein there are k-1 stages to perform and wherein for i=1 to k-1,

- starting from $MVF_i$ of dimension $M_i * N_i$, where $M_i = m_i * m_{i+1} * ... * m_k$ and $N_i = n_i * n_{i+1} * ... * n_k$
- partitioning $MVF_i$ into a number of $G_i$ rectangular groups such that $G_i = m_{i+1} * ... * mk * n_{i+1} * ... * nk$, wherein each rectangular group containing $S_i = m_i * n_i$ vectors,
- applying vector median filtering for each of the $G_i$ rectangular groups such that each group of $S_i$ vectors is represented by one dominant motion vector and $MVF_i$ is reduced to a dimension $M_i/m_i * N_i/n_i$, and let $MVF_{i+1}$ be the reduced matrix of motion vector fields,
- increasing the value i by 1,

- obtaining $MVF_{k,R}$ containing the row components of the motion vector field for the last reduction stage and $MVF_{k,C}$ containing the column components of the motion vector field for the last reduction stage,
- computing the means of the absolute values of $MVF_{k,R}$ and of $MVF_{k,C}$ which are respectively denoted $\mu_R$ and $\mu_C$ (23),
- comparing said computed means and selecting $MVF_{k,R}$ if $\mu_R > \mu_C$ such that the selected motion vector field $MVF_{k,S}$ is equal to $MVF_{k,R}$ and its mean $\mu_S$ is equal to $\mu_R$ and selecting $MVF_{k,C}$ if $\mu_R < \mu_C$ such that the selected motion vector field $MVF_{k,S}$ is equal to $MVF_{k,C}$ and its mean $\mu_S$ is equal to $\mu_C$ , (24),
- clustering the elements of $MVF_k$, the motion vector field of the last reduction stage, whose $MVF_{k,S}$ component absolute values are larger than $\mu S + c$ where $c$ is a small term (25),
- applying vector median filtering to the clustered vector set (26a) to obtain one of the two candidates, $\vec{V}_{F_0}$, to become the final global motion vector estimate,
- applying vector median filtering to the full vector set of the last reduction stage (26b) to obtain the other one of the two candidates, $\vec{V}_{F_1}$, to become the final global motion vector estimate,
- comparing the number of vectors in said clustered set with a predetermined threshold $Th_1$ and the sum of the row components absolute difference and of the column components absolute difference of $V_{F_0}$ and $V_{F_1}$ with another predefined threshold $Th_2$ (27),
- selecting $V_{F_0}$ as final global motion vector estimate if the number of elements of the clustered vector set is higher than threshold $Th_1$ and if said sum is higher than said threshold Th2, otherwise selecting $\vec{V}_{F_1}$ (27).

2. A method according to claim 1 wherein, said vector median filtering can be formulated by using Euclidean distance operator.

3. A method according to claim 2 wherein, said Euclidean distance operator can be replaced by absolute operator.

4. A method according to claim 1 wherein, said initial motion vector field is obtained by smooth motion estimation.

5. A method according to claim 1 wherein, said $Th_1$ can be chosen as 25% of number of said rectangular group vectors for last reduction stage.

6. A method according to claim 1 wherein, $Th_2$ can be chosen as 5.

7. A method according to claim 1 wherein, c can be chosen as 1 or 2 to decrease the impact of motion estimation noise and to give some bias towards clustering only the large vectors.

8. A method according to claim 1 wherein, said mean and median operations work dependently on the vertical and horizontal components of motion vector fields.

9. A system for camera motion estimation used in global motion estimation for video applications **characterized in that** it comprises;

- a frame delayer (1),
- a smooth motion estimation unit (2) to obtain required initial motion vector field,
- a camera motion estimation unit (3) to apply camera motion estimation method disclosed in any of the preceding claims.

**Patentansprüche**

1. **Verfahren zur Schätzung oder Abschätzung** einer Kamerabewegung unter Benutzung einer globalen Bewegungsabschätzung für Videoanwendungen, umfassend die Schritte

   Gewinnen eines Anfangsbewegungs-Vektorfelds $MVF_1$, aus einer Schätz- oder Abschätzungseinheit für weiche Bewegungen durch Ausführen einer Blockanpassungsoperation zwischen zwei aufeinanderfolgenden Einzelbildern; $MVF_1$ mit einer $M_1 x N_1$ Dimension wobei $M_1=m_1 *m_2 *...* mk$ (Gl.1 oder Eq.1), $N_1=n_1 * n_2 *...* nk$ (Gl.2 oder Eq. 2) ist und k die Anzahl von Vektorfeld-Reduktionsstufen wiedergibt, die angewandt werden,

   das Verfahren wird charakterisiert in dem es weiterhin die Schritte umfasst:

   Ermitteln der Anzahl von Reduktionsstufen k und Gewinnen von Elementen $m_i$ und $n_i$ entsprechend der Eq.1 und Eq.2 für i=1 bis k (21), Aufteilen der Bewegungs-Vektorfelder in rechtwinklige Gruppen für jede Reduktionsstufe (22), wobei k-1 Stufen durchzuführen sind und wobei für i=1 bis k-1,

   - ausgehend von $MVF_i$ der Dimension $M_i*N_i$, wo $M_i=m_i * m_{i+1}*...*m_k$ und $N_i=n_i*n_{i+1},*... n_k$,
   - aufteilend $MVF_1$ in eine Anzahl von $G_i$ rechtwinkliger Gruppen, so dass $G_i=m_{i+1},*...* mk * n_{i+1} *...* n_k$, wobei jede rechtwinklige Gruppe $S_i=m_i * n_i$ Vektoren enthält,
   - anwendend eine Vektor-Zentralwertfilterung (vector median filtering) auf jede der $G_i$ rechtwinkligen Gruppen, so dass jede der Gruppen von $S_i$ Vektoren durch einen dominanten Bewegungsvektor repräsentiert wird und $MVF_i$ auf eine Größe $M_i/m_i * N_i/n_i$ reduziert wird und $MVF_{i+1}$ als die reduzierte Matrix der Bewegungs-Vektorenfelder gegeben ist, Erhöhen des Wertes i um 1,

   Erhalten von $MVF_{k,R}$, das die Rohkomponenten des Bewegungs-Vektorfelds für die letzte Reduktionsstufe enthält und von $MVF_{k,C}$, das die Spaltenkomponenten des Bewegungs-Vektorfelds für die letzte Reduktionsstufe enthält,
   Berechnen der Mittelwerte der absoluten Werte von $MVF_{k,R}$ und $MVF_{k,C}$, welche entsprechend mit $\mu_R$ und $\mu_C$ (23) bezeichnet werden,
   Vergleichen der berechneten Mittelwerte und Auswählen von $MVF_{k,R}$, wenn $\mu_R > \mu_C$, so dass das ausgewählte Bewegungsvektorfeld $MVF_{k,S}$ gleich mit $MVF_{k,R}$ ist und sein Mittelwert $\mu_s$ gleich $\mu_R$ ist und Auswählen von $MVF_{k,C}$ wenn $\mu_R < \mu_C$ so dass das ausgewählte Bewegungs-Vektorfeld $MVF_{k,S}$ gleich $MVF_{k,C}$ ist und sein Mittelwert $\mu_s$ gleich $\mu_C$ (24) ist,
   Zusammenlegen (Clustering) der Elemente von $MVF_k$, das Bewegungs-Vektorfeld der letzten Reduktionsstufe, dessen absolute Werte der $MVF_{k,S}$ Komponenten größer sind als $\mu_S + c$, wobei c ein kleiner Wert (25) ist,
   Anwenden von Vektorzentralwert-Filterung (vector median filtering auf das zusammengelegte Vektorset (26a), um einen von zwei Kandidaten, $\vec{V}_{F_0}$ für die endgültige Abschätzung des globalen Bewegungsvektors zu erhalten,
   Anwenden der Vektorzentralwert-Filterung auf das vollständige Vektorset der letzten Reduktionsstufe (26b), um den anderen der beiden Kandidaten $\vec{V}_{F_1}$ zu erhalten, dies zur endgültigen Schätzung oder Abschätzung des globalen Bewegungsvektors,
   Vergleichen der Anzahl von Vektoren in dem zusammengelegten Set mit einer vorgegebenen Schwelle $Th_1$, und die Summe einer absoluten Differenz der Reihenkomponenten und der absoluten Differenz der Spaltenkomponenten der $\vec{V}_{F_0}$ und $\vec{V}_{F_1}$ mit einer anderen vorgegebenen Schwelle $Th_2$ (27),
   Auswählen von $\vec{V}_{F_0}$ als endgültige Abschätzung des globalen Bewegungsvektors,
   wenn die Anzahl von Elementen des zusammengelegten Vektorsets höher ist als die Schwelle $Th_1$ und wenn die Summe höher ist als die Schwelle $Th_2$, ansonsten Auswählen von $\vec{V}_{F_1}$ (27).

2. Verfahren nach Anspruch 1, wobei die Vektorzentralwert-Filterung mit Hilfe des euklidischen Entfernungsoperators formuliert werden kann.

3. Verfahren nach Anspruch 2, wobei der euklidische Entfernungsoperator durch einen absoluten Operator ersetzt werden kann.

4. Verfahren nach Anspruch 1, wobei das Ausgangsbewegungsvektorfeld durch eine weiche Bewegungs-Schätzung oder Abschätzung erhalten wird oder eine weiche Schätzung oder Abschätzung der Bewegung.

5. Verfahren nach Anspruch 1, wobei $Th_1$ für die letzte Reduktionsstufe als 25% der Anzahl der rechtwinkligen Gruppenvektoren gewählt werden kann.

**6.** Verfahren nach Anspruch 1, wobei $Th_2$ zu 5 gewählt werden kann.

**7.** Verfahren nach Anspruch 1, wobei c zu 1 oder zu 2 gewählt werden kann, um den Einfluss von Bewegungsschätzungs-Rauschen zu vermindern und eine Tendenz oder einen Bias in Richtung eines Zusammenlegens (Clusterings) von ausschließlich großen Vektoren vorzugeben.

**8.** Verfahren nach Anspruch 1, wobei die Mittelwert- und die Zentralwertoperationen in Abhängigkeit von den vertikalen und horizontalen Komponenten der Bewegungs-Vektorfelder arbeiten.

**9.** System für eine Kamera-Bewegungsabschätzung, benutzt in einer globalen Bewegungsabschätzung für Videoanwendungen, **dadurch gekennzeichnet, dass** das System umfasst

- einen Einzelbild-Verzögerer (1),
- eine Abschätzungseinheit (2) für weiche Bewegungen, um ein Ausgangs-Bewegungs-Vektorfeld zu erhalten,
- eine Kamera-Bewegungsabschätzungs-Einheit (3), um ein Kamera-Bewegungsabschätzungs-Verfahren nach einem der vorgehenden Ansprüche anzuwenden.

**Revendications**

**1.** Procédé d'estimation de mouvement de caméra utilisant une estimation de mouvement globale pour des applications vidéo, comprenant les étapes suivantes:

- obtenir un champ vectoriel de mouvement initial, $MVF_1$, à partir d'une unité d'estimation de mouvement lisse en exécutant une opération de raccord de blocs entre deux images consécutives; $MVF_1$ présentant une dimension $M_1 \times N_1$, où $M_1 = m_1 * m_2 * ... * m_k$ (équation 1), $N_1 = n_1 * n_2 * ... * n_k$ (équation 2), et k représente le nombre d'étages de réduction de champ vectoriel qui seront appliqués,

le procédé étant en outre **caractérisé en ce qu'**il comprend les étapes suivantes:

- déterminer le nombre d'étages de réduction k et obtenir des éléments mi et ni selon l'équation 1 et l'équation 2, pour i=1 à k (21), diviser les champs vectoriels de mouvement en groupes rectangulaires pour chaque étage de réduction (22), où il y a k-1 étages à exécuter, et dans lequel pour i=1 à k-1:

• commencer à partir de $MVF_i$ de dimension $M_i*N_i$, où $M_i = m_i * m_{i+1} * ... * m_k$ et $N_i = n_i * n_{i+1} * ... * n_k$;
• diviser $MVF_i$ en un certain nombre de $G_i$ groupes rectangulaires de telle sorte que $G_i = m_{i+1} * ... * m_k * n_{i+1} * ... * n_k$, dans lequel chaque groupe rectangulaire contient $S_i = m_i * n_i$ vecteurs;
• appliquer un filtrage médian vectoriel à chacun des $G_i$ groupes rectangulaires de telle sorte que chaque groupe de vecteurs $S_i$ soit représenté par un vecteur de mouvement dominant et que $MVF_1$ soit réduit à une dimension $M_i/m_i * N_i/n_i$ et laisser $MVF_{i+1}$ être la matrice réduite des champs vectoriels de mouvement,
• augmenter la valeur i de 1,

- obtenir $MVF_{k,R}$ contenant les composantes de rangées du champ vectoriel de mouvement pour le dernier étage de réduction et $MVF_{k,C}$ contenant les composantes de colonnes du champ vectoriel de mouvement pour le dernier étage de réduction,
- calculer les moyennes des valeurs absolues de $MVF_{k,R}$ et de $MVF_{k,C}$ qui sont respectivement désignées par $\mu_R$ et $\mu_C$ (23),
- comparer lesdites moyennes calculées et sélectionner $MVF_{k,R}$ si $\mu_R > \mu_C$ de telle sorte que le champ vectoriel sélectionné $MVF_{k,S}$ soit égal à $MVF_{k,R}$ et que sa moyenne $\mu_S$ soit égale à $\mu_R$, et sélectionner $MVF_{k,C}$ si $\mu_R < \mu_C$ de telle sorte que le champ vectoriel sélectionné $MVF_{k,S}$ soit égal à $MVF_{k,C}$ et que sa moyenne $\mu_S$ soit égale à $\mu_C$, (24);
- regrouper les éléments de $MVF_k$, le champ vectoriel de mouvement du dernier étage de réduction, dont les valeurs absolues de composante $MVF_{k,S}$ sont supérieures à $\mu_S + c$, où c est un petit terme (25)
- appliquer un filtrage médian vectoriel à l'ensemble de vecteurs regroupé (26a) afin d'obtenir qu'un premier de deux candidats, $\vec{V}_{F_0}$, devienne l'estimation de vecteur de mouvement globale finale;
- appliquer un filtrage médian vectoriel à l'ensemble de vecteurs complet du dernier étage de réduction (26b) afin d'obtenir que l'autre des deux candidats, $\vec{V}_{F_1}$, devienne l'estimation de vecteur de mouvement globale finale;

- comparer le nombre de vecteurs dans ledit ensemble regroupé avec un seuil prédéterminé $Th_1$ et la somme des différences absolues des composantes de rangées et des différences absolues des composantes de colonnes de $\vec{V}_{F_0}$ et $\vec{V}_{F_1}$ avec un autre seuil prédéfini $Th_2$ (27); et

- sélectionner $\vec{V}_{F_0}$ comme estimation de vecteur de mouvement globale finale si le nombre d'éléments de l'ensemble de vecteurs regroupé est supérieur au seuil $Th_1$, et si ladite somme est supérieure audit seuil $Th_2$, sinon sélectionner $\vec{V}_{F_1}$ (27).

2. Procédé selon la revendication 1, dans lequel ledit filtrage médian vectoriel peut être formulé en utilisant un opérateur de la distance euclidienne.

3. Procédé selon la revendication 2, dans lequel ledit opérateur de la distance euclidienne peut être remplacé par un opérateur absolu.

4. Procédé selon la revendication 1, dans lequel ledit champ vectoriel de mouvement initial est obtenu par une estimation de mouvement lisse.

5. Procédé selon la revendication 1, dans lequel ledit $Th_1$ peut être choisi comme valant 25 % du nombre de vecteurs des groupes rectangulaires pour le dernier étage de réduction.

6. Procédé selon la revendication 1, dans lequel $Th_2$ peut être choisi comme valant 5.

7. Procédé selon la revendication 1, dans lequel c peut être choisi comme valant 1 ou 2 afin de diminuer l'impact d'un bruit d'estimation de mouvement et de donner une certaine poussée vers le regroupement des grands vecteurs uniquement.

8. Procédé selon la revendication 1, dans lequel lesdites opérations de calcul des moyennes et de filtrage médian sont exécutées de façon indépendante sur des composantes verticales et horizontales des champs vectoriels de mouvement.

9. Système d'estimation de mouvement de caméra utilisé pour une estimation de mouvement globale dans des applications vidéo, **caractérisé en ce qu'**il comprend:

   - un retardateur d'image (1);
   - une unité d'estimation de mouvement lisse (2) servant à obtenir un champ vectoriel de mouvement initial requis; et
   - une unité d'estimation de mouvement de caméra (3) servant à appliquer un procédé d'estimation de mouvement de caméra divulgué dans l'une quelconque des revendications précédentes.

$f_n$

Frame
Delayer

$f_{n-1}$

**1**

Smooth Motion
Estimation Unit

MVF

**2**

**Camera
Motion
Estimation
Unit**

GM
estimate

**3**

**Figure - 1**

Figure - 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6738099 B2
- US 2009237516 A1

- EP 1117251 A1
- US 2006034528 A1

**Non-patent literature cited in the description**

- **M. HOETTER.** Differential estimation of the global motion parameters zoom and pan. *Signal Process.,* 1989, vol. 16, 249-265
- **DE HAAN G. ; BIEZEN P.W.A.** An efficient true-motion estimator using candidate vectors from a parametric motion model. *IEEE Trans. on Circ. and Systems for Video Techn.,* February 1998

- **JOERG HEUER ; ANDRÉ KAUP.** Global Motion Estimation in Image Sequences Using Robust Motion Vector Field Segmentation. *Proceedings ACM Multimedia,* 30 October 1999, vol. 99, 261-264
- **F. MOSCHENI ; F. DUFAUX ; M. KUNT.** A new two-stage global/local motion estimation based on a background/foreground segmentation. *IEEE Proc. ICASSP'95,* May 1995